# NEUE EUROPÄISCHE PATENTSCHRIFT

(11) **EP 1 381 775 B2**
(45) Veröffentlichungstag und Bekanntmachung des Hinweises auf die Entscheidung über den Einspruch: **05.09.2018**
(45) Hinweis auf die Patenterteilung: 14.07.2004
(21) Anmeldenummer: 02777070.0
(22) Anmeldetag: 12.09.2002
(51) Int. Cl.: F03D 1/00, F03D 11/00, F03D 11/04

(54) **WINDTURBINELEISTUNGSMODUL AUF DEM TURMFUNDAMENT GELAGERT**
WIND TURBINE POWER MODULE MOUNTED ON THE TOWER FOUNDATION
MODULE DE PUISSANCE DE TURBINE EOLIENNE, MIS EN PLACE SUR LES FONDATIONS DE LA TOUR

(30) Priorität: 14.09.2001 DE 10145414
(43) Veröffentlichungstag der Anmeldung: 21.01.2004
(60) Teilanmeldung: 04016488.1
(73) Patentinhaber: Wobben, Aloys, 26607 Aurich (DE)
(72) Erfinder: Wobben, Aloys, 26607 Aurich (DE)
(74) Vertreter: Eisenführ Speiser
(86) Internationale Anmeldenummer: PCT/EP2002/010212
(87) Internationale Veröffentlichungsnummer: WO 2003/025392

(56) Entgegenhaltungen:
- EP-A- 0 675 246
- WO-A1-01/06121
- WO-A1-99/30031
- DE-A- 3 732 670
- DE-A- 19 816 483
- DE-A1- 19 821 592
- DE-C2- 4 241 952
- DE-U- 9 417 738
- DE-U- 29 518 899
- US-A- 4 772 999
- US-B1- 6 173 537
- ORLHAC M: "LE POSTE SOCLE DANS LA MISE EN SOUTERRAIN DES RESEAUX RURAUX" REVUE GENERALE DE L'ELECTRICITE, RGE. PARIS, FR, Nr. 4, 1. April 1993 (1993-04-01), Seiten 23-25, XP000355859 ISSN: 0035-3116
- PATENT ABSTRACTS OF JAPAN vol. 1995, no. 08, 29. September 1995 (1995-09-29) & JP 07 122438 A (TOHOKU DENKI SEIZO KK), 12. Mai 1995 (1995-05-12)
- Nordfriesland Windpark mit 50 Windenergieanlagen vom Typ HSW 250 mit Transformator im Turm, Bauhajahr: 1990/91. Standort: Friedrich-Wilhelm-Lübeck-Koog. Hersteller: Husumer Schiffswerft, Inh. Gebrüder Kröger GmbH&Co.KG
- Fotos von der HSW 250 mit der Bau - Nr.: 16 im Nordfiesland Windpark im Friedrich - Wilhelm-Lübeck-Koog vom 02.06.2004
- Eidesstattliche Versicherung von Herrn Hans-Dieter Struck zur Aufstellung der HSW 250 sowie der Bestätigung, dass diese Anlagen so wie sie heute zu besichtigen sind, den ursprünglich errichteten Anlagen entsprechen
- Informatuinsblatt zum Nordfriesland Windpark Veröffentlicht: 1991
- Informationsbroschüre zur Nordfriesland Windpark GmbH & Co.KG, herausgegeben von der BVT Beratungs-, Verwaltungs- und Treuhandgesellschaft für internationale Vermögensanlagen mbH, München 'DeWind Strategische Allianz mit Krupp "Wind-Kraft Journal, Sonderausgabe 1997, Seite 84 Verlag Natürliche Energie GmbH 24811 Brekendorf
- "DeWind Strategische Allianz mit Krupp" Wind-Kraft Journal, Sonderausgabe 1997, Seite 84 Verlag Natürliche Energie GmbH 24811 Brekendorf
- Neue Energie, Nr. 10/Oktober 1998 URANUS Verlagsges. m.b.H.
- Neustiftgasse 11 5AJTop 20 A-1070 Wien
- BONUS INFO, THE NEVERENDING STORY Winter 1999
- Wind-Kraft Journal, Sonderausgabe-Jobs in der Windenergie 2000 Verlag Natürliche Energie GmbH 24811 Brekendorf
- Middelgrunden Windpark Baujahr: 2000
- Middelgrunden: Danmarks smukkeste havmollepark: en fotobog om opforelsen af Middelgrundens Havmollepark Veröffentlicht: 2001 E6.2 The Middelgrunden Offshore Windfarm A Populär Initiative Veröffentlicht im März 2003
- Middelgrunden Offshore, A newsletter for customers and business associates Veröffentlicht: 01. July 2001
- Veröffentlichung zur: 2001 European Wind Energy Conference. 01.-07.2001 Copenhagen "EXPERIENCES FROM THE ESTABLISHMENT OF MIDDELGRUNDEN 40 MW OFFSHORE WINDFARM"Author: Hans Chr. Sørensen
- Windenergieanlage vom Typ MD 70 Aufstellung der ersten Anlage: 1998 Hersteller: ursprünglich Jacobs Energie heute REpower Systems AG
- Fotos 1-5 von der offiziellen Vorstellung der ersten MD 70 am 17.09.1998, entwickelt am 18.09.1998 (siehe Bild 1 'Photo-Index')
- Artikel von Björn Johnsen in "Erneuerbare Energien" Ausgabe 7/99 *MD 70:1. 500-kW- Mühle mit schlankem Design'
- Auflistung der in der Zeit von 1998 bis Juli 2001 errichteter MD70-Anlagen
- Fotos 1-7 vom Aufbau der MD 70 mit der Bau-Nr.: 70002-01. Standort Lichterfelde in der Zeit vom 9.-15. Februar 2000
- Eidestattliche Versicherung des Herrn Gutmundt Ertel hinsichtlich des Verfahrens zum Aufbau der MD 70 in Lichterfelde
- "North Sea Offshore Wind- A Powerhouse for Europe, Technical Possibilities and Ecological Considerations" Veröffentlicht durch Greenpeace e.V. Veröffentlicht im Oktober 2000
- Danish Utility Model Registration DK 97 00453 U3 (published 13 March 1998);
- English translation of D1
- Danish Utility Model no. DK 1997 00453 U3 (published 13 March 1998);
- English translation of E1a;
- Danish Utility model no. DK 2000 00086 U3 (puplished 12 May 2000)
- Henrik Stiesdal et al. "Bonus Info Winter 1999", winter 1999, pp. 1.2 and 5 to 9
- Henrik Stiesdal et al, "Middelgrunden Offshore The project", 1 July 2001. pp.. 1 to 14
- Mads Eskesen, Hans Christian Sorensen et al, "Middelgrunden Danmarks smukkeste Havmollepark - The Beauty In The Wind", April 2001, SPOK ApS, Front page pp. 1 to 31 and 55 to 60
- Hans Christian Sorensen et al, "EXPERIENCE FROM THE ESTABLISHMENT OF MIDDELGRUNDEN 40 MW OFFSHORE WIND FARM", 1 to 7 July 2001, European Wind Energy Conference Copenhagen, Denmark.
- Hans Christian Sorensen et al, "The Middelgrunden Offshore Wind Farm; A populär Initiative", March 2003, Copenhagen Environment and Energy Office, pp. 1 to 9, 14 and 15 to 28
- Deutsches Windenergie Institut /DEWI), "North Sea Offshore Wind - A Powerhouse for Europe", Oktober 2000, Greenpeace e.V. pp. 1, 2 and 32 to 56

## Beschreibung

Die Erfindung betrifft ein Verfahren zur Errichtung einer Windenergieanlage sowie die Windenergieanlage in ihrer Ausgestaltung selbst.

Bisher wird bei der Errichtung von Windenergieanlagen zunächst ein Fundament erstellt, dann der Turm der Windenergieanlage errichtet und anschließend das Maschinenhaus an der Turmspitze ausgerüstet und der Rotor mit den Rotorblättern angebracht. Hiernach werden die elektrischen Leistungsmodule wie der Transformator, Schaltschränke, gegebenenfalls Wechselrichter, Mittelspannungsanlage, Niederspannungsverteilung usw. installiert. Dies geschieht fast immer in einem eigenen kleinen Gebäude außerhalb der Windenergieanlage.

In DE 198 16 483.1 ist bereits auch schon vorgeschlagen worden, den Transformator innen im Turm unterzubringen, so dass es der Errichtung eines eigenen Trafogebäudes mit eigenem Fundament nicht mehr bedarf.

Aufgabe der Erfindung ist es nun, ein Verfahren zu entwickeln, mittels dem die Errichtung von Windenergieanlagen noch günstiger, vor allem aber auch schneller vorgenommen werden kann.

Die Aufgabe wird mit einem Verfahren mit den Merkmalen nach Anspruch 1 und einer Windenergieanlage mit den Merkmalen nach Anspruch 2 gelöst. Vorteilhafte Weiterbildungen sind in den Unteransprüchen beschrieben.

Erfindungsgemäß wird vorgeschlagen, abweichend von der bisherigen Konstruktion von Windenergieanlagen, nach Errichtung des Fundaments der Windenergieanlage die wesentlichen Leistungsmodule, also Trafo, Schaltschränke usw. auf dem Fundament zu platzieren und erst danach den Turm zu errichten, so dass die gesamten Leistungsmodule nach Errichtung des Turms im Bereich des Turmfundamentes bzw. im unteren Teil des Turms geschützt sind und sicher auf dem Turmfundament ruhen.

Die Leistungsmodule sind soweit wie möglich bereits vorgefertigt und auf Trägem montiert, so dass durch einen Kran, den man ohnehin zur Errichtung einer Windenergieanlage benötigt, die Leistungsmodule auf dem Turmfundament aufgestellt werden können und die gesamte Betriebsfertigung, insbesondere das Verlegen von Kabeln sowie die gesamte Betriebsvorbereitung der Windenergieanlage durch Einstellung einzelner Steuerungsmodule, Einrüstung der Schaltschränke etc. in einem geschützten Raum stattfinden kann und mit diesen Tätigkeiten begonnen werden kann, nachdem der Turm errichtet wurde.

Die Träger der Leistungsmodule weisen Stützfüße auf, die wiederum auf vorpositionierten Platten auf dem Turmfundament ruhen. Diese Platten werden bereits bei der Erstellung des Fundaments vor bestimmten Positionen eingelassen und mit dem Fundament fixiert, so dass auch eine spätere Aufstellung der Leistungsmodule auf sehr einfache Art und Weise vorgenommen werden kann.

Schließlich ist es auch sehr vorteilhaft, wenn für die Kabel, die aus der Windenergieanlage herausführen, also insbesondere die Stromübertragungskabel, Steuerungskabel etc. Leerrohrtraversen im Fundament der Windenergieanlage vorgesehen sind und diese Leerrohrtraversen in vorbestimmten Positionen fixiert liegen. Hierzu werden die Traversen mittels Haltearmen, die ihrerseits wiederum in Teilen des Fundaments oder in der untersitzenden Sektion eines Turmes fixiert sind, gehalten. Durch diese Leerrohrtraversen kann der Bereich der Kabelzuführung exakt vorbestimmt werden und vor allem auch so gelegt werden, dass die Kabel, die aus dem Leistungsmodul in das Fundament reichen, über einen kürzesten und optimalen Kabelweg verfügen.

Die erfindungsgemäßen Maßnahmen erleichtern also auch die gesamte elektrische Einrichtung der Windenergieanlage durch eine Vorfertigung von einzelnen Modulen wie den Leerrohrtraversen, Leistungsmodulträgern etc. bereits bei der Fundamenterrichtung.

Mit den erfindungsgemäßen Maßnahmen lässt sich die gesamte Errichtungszeit der Windenergieanlage deutlich verkürzen. Auch lassen sich mit der Erfindung die Kosten für die gesamte Errichtung der Windenergieanlage verringern, ohne dass irgendwelche technischen Nachteile in Kauf genommen werden müssen.

Die Erfindung wird nachfolgend anhand eines in einer Zeichnung ausgeführten Beispiels näher erläutert.

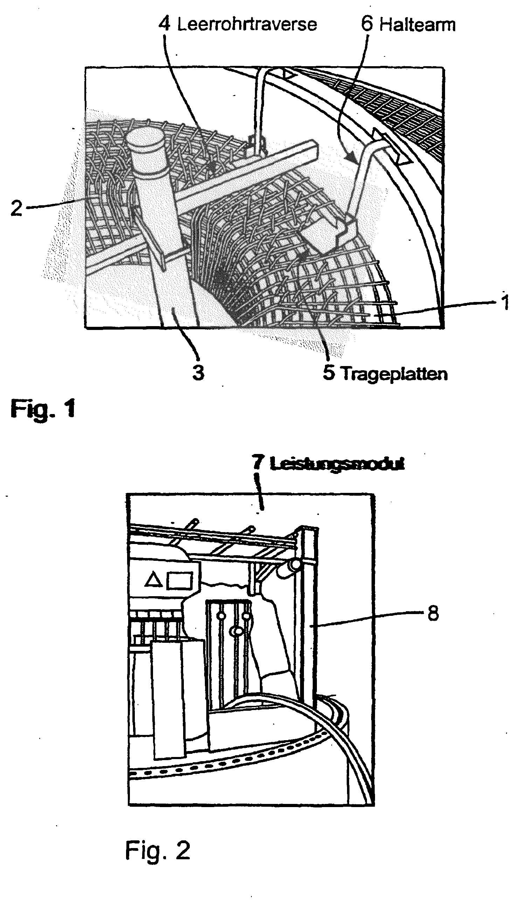

Figur 1 zeigt eine Aufsicht auf ein voreingerichtetes Fundament (ohne Betonfüllung) mit einer Stahlarmierung 1 und 2, an einem Leerrohr 3, welches über eine Verstrebung 4 mit einer an die Armierung angrenzende unterste Turmsektion gehalten wird. Ferner sind Tragplatten 5 zu erkennen, die für Haltearme 6 in der untersten Turmsektion, (die später nach der Errichtung der Windenergieanlage nicht mehr zu sehen ist) angebracht sind.

Das Leerrohr 3 dient später zur Aufnahme von Kabeln, beispielsweise der Stromkabel, über die die gesamte elektrische Energie der Windenergieanlage zum Netz über Erdkabel abgeführt wird. Hierzu ist oftmals nicht nur ein einziges Rohr, sondern mehrere Rohre vorgesehen.

Figur 2 zeigt die Fundamentsektion nach Einfüllung des Betons. Hierbei ist zu sehen, dass die Leerrohre in ihrer vorfixierten Position verbleiben und auch die Tragplatten mit einbetoniert sind, wobei beim Betonieren darauf zu achten ist, dass die Tragplatten satt auf dem Konstruktionsbeton aufliegen und so einen flächigen Lastabtrag gewährleisten. Der Beton reicht bis zur Oberkante der Tragplatten und ist sorgfältig an den Plattenrand angearbeitet.

Nach Aushärtung des Betons können die Haltearme zum Halten der Tragplatten wie auch die Traversen zur Fixierung der Leerrohre abmontiert und für die Errichtung weiterer Anlagen wiederverwendet werden.

Nach dem Aushärten des Betons wird zur weiteren Errichtung der Windenergieanlage nicht - wie bis dahin üblich - der Turm auf das unterste Fundament für die Turmsektion aufgesetzt, sondern es wird zunächst ein Leistungsmodul 7 auf die Tragplatten 5 gestellt (Figuren 2, 3 und 4).

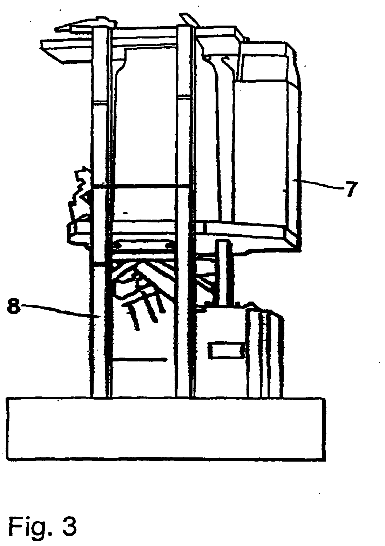

Ein solches Leistungsmodul 7 ist in Figur 3 in einer zweiteiligen Ausführung gezeigt, wobei das Leistungsmodul auch aus weiteren Teilen bestehen kann.

Die beiden Teile des Leistungsmoduls 7 sind im dargestellten Beispiel übereinander gestellt und das gesamte Leistungsmodul besteht aus zwei übereinandergestellten Trägem 8, die ihrerseits wiederum wesentliche Teile der Leistungsmodule aufnehmen, also beispielsweise den Transformator, Wechselrichter, Schaltschränke, Mittelspannungsanlage etc..

Die übereinandergestellten Träger 8 sind nach Art eines Rahmens aufgebaut und passen exakt übereinander, so dass auch eine zuverlässige Befestigung gegeneinander gewährleistet ist.

Die einzelnen Träger weisen unter anderem vier - ein Rechteck aufspannende - vertikal ausgerichtete Holme auf, die untereinander verbunden sind. Diese Holme sind an ihrer Unter- und Oberseite miteinander verschraubt.

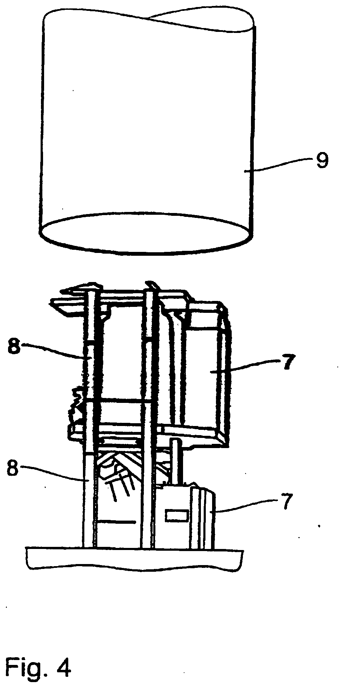

Nach der Aufstellung des elektrischen Leistungsmoduls auf dem Fundament wird der Turm 9 errichtet (Figur 4) und hierbei über das Leistungsmodul gestülpt. Dazu sind die äußeren Abmaße des Leistungsmoduls hinsichtlich Breite und Länge geringer als der Innendurchmesser des Turms im unteren Turmbereich/Fundamentbereich.

Nach Errichtung des Turms wird die Windenergieanlage wie üblich mit dem Maschinenhaus ausgestattet, der Rotor wird montiert und für die Inbetriebnahme werden entsprechende elektrische Verbindungen zwischen dem Generator und dem Leistungsmodul 7 hergestellt und es erfolgt auch der Anschluss des Leistungsmoduls (Ausgang des Transformators) an das Stromversorgungsnetz.

Wenn die vorbeschriebenen Leerrohre bzw. für die Kabeldurchführung vorgesehenen Einrichtungen in bestimmter vorbeschriebener Position vorfixiert sind, kann auch die Verbindung zwischen dem Leistungsmodul und dem Netz äußerst schnell und günstig hergestellt werden, wobei die Kabellängen insgesamt minimal sind, weil die Leerrohre dort positioniert sind, wo sie genau zur Anlage mit den entsprechenden Teilen des Leistungsmoduls kommen.

Bei der erfindungsgemäßen Windenergieanlage ist es auch vorteilhaft, wenn der Zugang der Windenergieanlage nicht mehr unbedingt im festen Fundamentbereich durch eine übliche Tür erfolgt, sondern durch eine Tür (Zugang), die so positioniert ist, dass sie in den Bereich oberhalb der Hochoder Mittelspannung führenden Teile des Leistungsmoduls mündet. Hierzu kann an der Außenseite des Turms eine entsprechende Leiter oder Treppe vorgesehen sein. Diese Positionierung der Zugangstür hat den Vorteil, dass das Personal, welches die Anlage häufiger betreten muss, sich nicht stets an den Hoch- oder Mittelspannung führenden Teilen des Leistungsmoduls vorbei bewegen muss, während die Anlage in Betrieb ist. Damit wird auch sichergestellt, dass nicht unvorhergesehenerweise oder aus Versehen während des Betriebs der Windenergieanlage jemand sich in unmittelbarer Nähe des Leistungsmoduls befindet und hierbei in Berührung mit spannungs- oder stromgeführten Teilen kommt, was einen großen Unfall verursachen könnte.

Im Bereich der Zugangstür des Turms ist dann eine entsprechende Zwischenplattform vorgesehen, die das Personal, welches den Turm betritt, begehen kann, um dann im Inneren des Turms weiter in die Windenergieanlage hoch zu steigen oder an verschiedenen Steuereinrichtungen Einstellungen vorzunehmen oder auch Messdaten abzulesen.

Bei einer Windenergieanlage des erfindungsgemäßen Typs handelt es sich um eine solche, die regelmäßig über mehr als 100 kW Nennleistung verfügt, vorzugsweise eine Nennleistung im Bereich von 500 kW, 1 MW, 1,5 MW oder deutlich mehr aufweist. Bevorzugt ist die Zwischenplattform mit einer verschließbaren Platte versehen, durch die das Personal in den unteren Bereich des Leistungsmoduls einsteigen kann. Mit dem Verschluss der Klappe ist eine weitere Sicherung des unteren Teils des Leistungsmoduls gegen unbefugten Zugriff gewährleistet.

Der innere Durchmesser des Turms im Fundamentbereich kann dabei mehrere Meter betragen, so dass auch die gesamte Fläche dort z.B. 100 m² oder mehr beträgt und daher auch eine ausreichend große Fläche zur Aufnahme der Leistungsmodule zur Verfügung steht. Soweit in dieser Anmeldung der Begriff "Leistungsmodul" verwendet wird, so ist damit der Mittel- bzw. Hochspannungsführende Teil der Windenergieanlage gemeint. Dies sind insbesondere die Aggregate wie Transformator oder Wechselrichter oder Notschalter sowie der Mittelspannungsschaltschrank oder auch die Niederspannungsverteiler.

## Patentansprüche

1. Verfahren zur Errichtung einer Windenergieanlage mit einem Turm (9), der auf einem Fundament gründet sowie wenigstens einem elektrischen Leistungsmodul (7), welches im wesentlichen aus einem Transformator und gegebenenfalls einem Wechselrichter-und/oder einer anderen elektrischen Einrichtung zur Steuerung der Windenergieanlage und zur Durchleitung der elektrischen Leistung besteht, die vom Generator der Windenergieanlage zur Verfügung gestellt und in ein Netz eingespeist wird, wobei das Leistungsmodul (7) vor Errichtung des Turms auf das Turmfundament gesetzt wird, wobei das Leistungsmodul einen Träger aufweist, der die elektrischen Einrichtungen des Leistungsmoduls aufnimmt und das Leistungsmodul durch einen Kran, der zur Errichtung der Windenergieanlage eingesetzt wird, auf das Turmfundament gesetzt wird und der Träger des Leistungsmoduls Stützfüße aufweist, die auf Platten ruhen, die bereits bei der Erstellung des Fundaments in bestimmten Positionen eingelassen und mit dem Fundament fixiert werden und die Breite und/oder Länge des Leistungsmoduls geringer ist als der Durchmesser des Turms der Windenergieanlage im Fundamentbereich.

2. Windenergieanlage bestehend aus einem Turm, welcher auf einem Fundament gründet, und einem Leistungsmodul, wobei das Leistungsmodul einen Transformator aufweist, mittels dem die elektrische Energie, die vom Generator der Windenergieanlage zur Verfügung gestellt wird, auf eine mittlere und/oder Hochspannung transformiert wird und das Leistungsmodul eine Einrichtung enthalt, mittels der die elektrische Energie, die vom Generator der Windenergieanlage bereitgestellt wird, gesteuert und geleitet wird, wobei das Leistungsmodul einen Träger aufweist, der auf dem Fundament der Windenergieanlage aufgesetzt ist, und der Träger die elektrischen Einrichtungen des Leistungsmoduls aufnimmt und die Breite und/oder Länge des Leistungsmoduls geringer ist als der Durchmesser des Turms der Windenergieanlage im Fundamentbereich,
**dadurch gekennzeichnet, dass** der Turm der Windenergleanlage einen als Tür ausgebildeten Zugang aufweist, und dass die Tür so positioniert ist, dass sie in den Bereich oberhalb der Hoch- oder Mittelspannung führenden Teile des Leistungsmoduls mündet. und der Träger des Leistungsmoduls Stützfüße aufweist, die auf Platten ruhen, die bereits bei der Erstellung des Fundaments in bestimmten Positionen eingelassen und mit dem Fundament fixiert sind, und
dass im Turm im Bereich der Zugangstür des Turms eine Zwischenplattform vorgesehen ist.

3. Windenergieanlage nach Anspruch 2,
**dadurch gekennzeichnet, dass** das Leistungsmodul zweiteilig ausgebildet ist, wobei die beiden Teile aufeinander gestellt sind und die Träger im Übergangsbereich zwischen dem ersten und zweiten Teil so ausgebildet sind, dass sie aufeinander passen und gegen einander befestigt sind.

4. Windenergieanlage nach einem der Ansprüche 2 oder 3,
**dadurch gekennzeichnet, dass** das Leistungsmodul aus einem Transformator und einem Wechselrichter und wenigstens einem Schaltschrank zur Aufnahme von elektrischen Steuerungseinrichtungen der Windenergieanlagen besteht.

5. Windenergieanlage nach einem der vorhergehenden Ansprüche,
**dadurch gekennzeichnet, dass** im Fundament der Windenergieanlage Leerrohre (3) zur Aufnahme von Kabeln angeordnet sind und die Leerrohre vor der Feststellung des Fundaments mit den Traversen fixiert sind.

## Claims

1. Method for construction of a wind energy system having a tower (9) which is based on a foundation and having at least one electrical power module (7) which essentially consists of a transformer and optionally an inverter and/or some other electrical device for controlling the wind energy system and for passing on the electrical power, which is provided by the generator in the wind energy system and is fed into a grid system, with the power module (7) being placed on the tower foundation, before the construction of the tower, wherein the power module has a support which accommodates the electrical devices of the power module, and the power module is placed on the tower foundation by a crane which is used for constructing the wind energy system, and the support of the power module has supporting feet which rest on plates which are set in in certain positions and fixed with the foundation already during finishing of the foundation, and the width and/or length of the power module are/is less than the diameter of the tower of the wind energy system in the foundation area.

2. Wind energy system consisting of a tower which is based on a foundation, and a power module, with the power module having a transformer by means of which the electrical power which is provided by the generator in the wind energy system is transformed to a medium and/or high voltage, and the power module contains a device by means of which the electrical power which is provided by the generator in the wind energy system is controlled and passed on, wherein the power module has a support which is placed on the foundation of the wind energy system, and the support accommodates the electrical devices of the power module, and the width and/or length of the power module are/is less than the diameter of the tower of the wind energy system in the foundation area,
**characterized in that** the tower of the wind energy system has an access in the form of a door, and **in that** the door is positioned such that it opens into the region above the parts of the power module carrying high or medium voltage, and the support of the power module has supporting feet which rest on plates which are set in in certain positions and fixed with the foundation already during finishing of the foundation, and
that an intermediate platform is provided in the tower in the region of the access door of the tower.

3. Wind energy system according to Claim 2,
**characterized in that** the power module is formed in two parts, with the two parts being placed one on top of the other, and the supports being designed in the transitional area between the first part and the second part such that they match one another and are attached to one another.

4. Wind energy system according to one of Claims 2 or 3,
**characterized in that** the power module consists of a transformer and an inverter, and at least one switchgear cabinet for accommodating electrical control devices for the wind energy systems.

5. Wind energy system according to one of the preceding claims,
**characterized in that** empty conduits (3) for accommodating cables are arranged in the foundation of the wind energy system, and the empty conduits are fixed to the crossmembers before the finishing of the foundation.

## Revendications

1. Procédé servant à construire une éolienne avec une tour (9), qui est basée sur des fondations, ainsi qu'au moins un module de puissance (7) électrique, qui est constitué sensiblement d'un transformateur et éventuellement d'un onduleur et/ou d'un autre dispositif électrique servant à commander l'éolienne et servant à acheminer la puissance électrique, qui est fournie par le générateur de l'éolienne et est injectée dans un réseau, dans lequel le module de puissance (7) est placé sur les fondations de tour avant la construction de la tour, dans lequel le module de puissance présente un support, qui accueille les dispositifs électriques du module de puissance, et le module de puissance est placé sur les fondations de tour par une grue, qui est utilisée pour construire l'éolienne, et le support du module de puissance présente des pieds d'appui, qui reposent sur des plaques, qui sont déjà encastrées lors de la création des fondations dans des positions définies et sont fixées aux fondations, et la largeur et/ou la longueur du module de puissance sont inférieures au diamètre de la tour de l'éolienne dans la zone des fondations.

2. Eolienne constituée d'une tour, qui est basée sur des fondations, et d'un module de puissance, dans laquelle le module de puissance présente un transformateur, au moyen duquel l'énergie électrique, qui est fournie par le générateur de l'éolienne, est transformée sur une tension moyenne et/ou une tension élevée, et le module de puissance contient un dispositif, au moyen duquel l'énergie électrique, qui est fournie par le générateur de l'éolienne, est commandée et acheminée, dans laquelle le module de puissance présente un support, qui est placé sur les fondations de l'éolienne et le support accueille les dispositifs électriques du module de puissance et la largeur et/ou la longueur du module de puissance sont inférieures au diamètre de la tour de l'éolienne dans la zone des fondations,
**caractérisée en ce que** la tour de l'éolienne présente un accès réalisé sous la forme d'une porte, et que la porte est positionnée de telle sorte qu'elle débouche dans la zone au-dessus des parties du module de puissance guidant la tension élevée ou la tension moyenne, et le support du module de puissance présente des pieds d'appui, qui reposent sur des plaques, qui sont déjà encastrées lors de la création des fondations dans des positions définies et sont fixées aux fondations, et
qu'une plate-forme intermédiaire est prévue dans la tour dans la zone de la porte d'accès.

3. Eolienne selon la revendication 2,
**caractérisée en ce que** le module de puissance est réalisé en deux parties, dans laquelle les deux parties sont posées l'une sur l'autre et les supports sont réalisés dans la zone de passage entre la première et la seconde partie de telle sorte qu'ils sont adaptés les uns aux autres et sont fixés les uns contre les autres.

4. Eolienne selon l'une quelconque des revendications 2 ou 3,
**caractérisée en ce que** le module de puissance est constitué d'un transformateur et d'un onduleur et d'au moins une armoire de distribution servant à accueillir des dispositifs de commande électriques des éoliennes.

5. Eolienne selon l'une quelconque des revendications précédentes,
**caractérisée en ce que** des tubes vides (3) servant à accueillir des câbles sont disposés dans les fondations de l'éolienne, et les tunes vides sont fixés avant l'immobilisation des fondations avec les traverses.
